(19) **Europäisches Patentamt European Patent Office Office européen des brevets**

(11) **EP 4 607 609 A1**

(12) **EUROPEAN PATENT APPLICATION**
published in accordance with Art. 153(4) EPC

(43) Date of publication:
   **27.08.2025 Bulletin 2025/35**

(51) International Patent Classification (IPC):
   **H01M 4/36** (2006.01)     **H01M 4/525** (2010.01)
   **H01M 4/505** (2010.01)

(21) Application number: **23929449.9**

(52) Cooperative Patent Classification (CPC):
   **H01M 4/36; H01M 4/505; H01M 4/525;** Y02E 60/10

(22) Date of filing: **31.03.2023**

(86) International application number:
   **PCT/CN2023/085628**

(87) International publication number:
   **WO 2024/197866 (03.10.2024 Gazette 2024/40)**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(71) Applicant: **Contemporary Amperex Technology (Hong Kong) Limited**
   **Hong Kong (HK)**

(72) Inventors:
   • **HUAN, Shuxing**
     **Ningde, Fujian 352100 (CN)**

   • **SHEN, Chongheng**
     **Ningde, Fujian 352100 (CN)**
   • **CHEN, Qiang**
     **Ningde, Fujian 352100 (CN)**
   • **WU, Changxu**
     **Ningde, Fujian 352100 (CN)**
   • **LIU, Na**
     **Ningde, Fujian 352100 (CN)**

(74) Representative: **Jacob, Reuben Ellis et al**
   **Maucher Jenkins**
   **Seventh Floor Offices**
   **Artillery House**
   **11-19 Artillery Row**
   **London SW1P 1RT (GB)**

(54) **POSITIVE ELECTRODE ACTIVE MATERIAL, POSITIVE POLE PIECE, SECONDARY BATTERY, AND ELECTRICAL APPARATUS**

(57)    The present application provides a positive electrode active material. The positive electrode active material comprises: an aggregate material, the chemical formula of the aggregate material being $Li_aNi_xCo_yM_{1-x-y}O_{2-b}$, wherein $0.6 \leq a \leq 1.2$, $0.6 \leq x \leq 1$, $0 \leq y \leq 0.4$, and $-0.1 \leq b \leq 0.1$, and M comprises one or more of Mn, Al, B, Zr, Sr, Y, Sb, W, Ti, Mg, Nb, and Mo; primary particles of the aggregate material have a particles size of 100-600 nm, and the particle size distribution of the aggregate material satisfies $(Dv90-Dv10)/Dv50 \geq 1.6$. The positive electrode active material can increase the compaction density of a pole piece, increase the energy density of a battery, and satisfy the requirements of a high-energy-density battery.

FIG. 1

# EP 4 607 609 A1

## Description

### TECHNICAL FIELD

The present application relates to the technical field of secondary batteries, and in particular, to a positive electrode active material, a positive electrode plate, a secondary battery, and an electric device.

### BACKGROUND

Since the commercialization of secondary batteries, they have rapidly become energy storage devices applied in various fields of daily life due to their advantages, including high energy density, high battery voltage, long cycle life, and no memory effect, and have also attracted widespread interest from researchers and experts. With the development of electronic and electrical devices, particularly the rapid development of electric vehicles, existing secondary batteries are unable to meet usage requirements in terms of energy density and rate capability. Therefore, the search for and preparation of materials with high energy density has become an urgent issue.

### SUMMARY

The present application is made in view of the above issues, and the objective of the present application is to provide a positive electrode active material. By controlling particle size distribution and the particle size of primary particles of the material, the present application improves the compaction density of electrode plates and the energy density of batteries. Meanwhile, the battery exhibits excellent rate capability, meeting the usage requirements of novel batteries.

A first aspect of the present application provides a positive electrode active material. The positive electrode active material includes an aggregate material, and a chemical formula of the aggregate material is $Li_aNi_xCo_yM_{1-x-y}O_{2-b}$, where $0.6 \leq a \leq 1.2$, $0.6 \leq x \leq 1$, $0 \leq y \leq 0.4$, and $-0.1 \leq b \leq 0.1$, and M includes one or more of Mn, Al, B, Zr, Sr, Y, Sb, W, Ti, Mg, Nb, and Mo. A primary particle of the aggregate material has a particle size of 100 to 600 nm, and particle size distribution of the aggregate material satisfies (Dv90 - Dv10) / Dv50 $\geq$ 1.6.

The aggregate material is controlled to have a broader particle size distribution, with large and small particles fitting together to fill gaps. This results in a more compact particle packing in the positive electrode active material, increasing the compaction density of the electrode plate and the energy density of the lithium-ion battery. Meanwhile, by controlling the size of the primary particles in the aggregate material within a suitable range, the lithium-ion migration distance is shortened, a large number of lithium-ion active sites are exposed, and the specific capacity of the aggregate material is enhanced. The battery exhibits excellent rate capability, thereby increasing the energy density of the material.

In any embodiment, in the chemical formula $Li_aNi_xCo_yM_{1-x-y}O_2$, $0.6 \leq a \leq 1.2$, $0.8 \leq x \leq 1$, $0 \leq y \leq 0.2$, and $-0.1 \leq b \leq 0.1$, and optionally, $0.8 \leq a \leq 1.2$, $0.93 \leq x \leq 0.98$, $0 \leq y \leq 0.07$, and $-0.1 \leq b \leq 0.1$.

The positive electrode active material has high specific capacity and good structural stability, enabling the battery to achieve high energy density and excellent rate capability.

In any embodiment, the primary particle of the aggregate material has a particle size of 200 to 500 nm.

The particle size of the primary particle of the aggregate material is within a suitable range, exposing more lithium-ion reaction active sites, thereby increasing the specific capacity of the aggregate material and the energy density of the battery. The particle size of the primary particle within the suitable range can also reduce side reactions between the electrolytic solution and the material, thereby reducing the loss of irreversible capacity.

In any embodiment, the aggregate material has a particle size Dv50 of 6 to 15 $\mu$m, optionally 7 to 13 $\mu$m.

The particle size Dv50 of the aggregate material is within a suitable range, which is conducive to achieving a high compaction density for the positive electrode plate and increases the energy density of the battery. Additionally, the appropriate Dv50 of the aggregate material enhances ion conductivity and electron conductivity of the material, resulting in excellent rate capability for the battery.

In any embodiment, a particle size distribution graph of the aggregate material, as determined by particle size analysis-laser diffraction methods, is unimodal, with a unimodal peak position ranging from 6 to 15 $\mu$m, optionally 7 to 13 $\mu$m.

The particle size distribution graph of the aggregate material is unimodal, with the unimodal peak position within a suitable range. This contributes to a high compaction density for the positive electrode plate and increases the energy density of the battery. Additionally, the unimodal peak position within the suitable range indicates that the material has an appropriate particle size, which enhances ion conductivity and electron conductivity of the material, thereby improving the rate capability of the battery.

In any embodiment, the particle size distribution of the aggregate material satisfies $1.6 \leq$ (Dv90 - Dv10) / Dv50 $\leq$ 2.3, and optionally, the particle size distribution of the aggregate material satisfies $1.8 \leq$ (Dv90 - Dv10) / Dv50 $\leq$ 2.1.

The particle size distribution of the aggregate material is within a suitable range. In one aspect, the compaction density of the electrode plate can be enhanced through the gradation of large and small particle sizes, thereby increasing the energy density of the battery. In another aspect, the appropriate particle size distribution reduces the impact of an excessive presence of oversized or undersized particles in the material on the compaction density.

In any embodiment, the aggregate material has a specific surface area of 0.5 $m^2/g$ to 0.9 $m^2/g$.

The specific surface area of the aggregate material is within a suitable range, shortening the lithium-ion migration distance and improving the rate capability of the battery. Additionally, the appropriate specific surface area can expose more lithium-ion reaction active sites, enhancing the specific capacity of the electrode plate and increasing the energy density of the battery. Furthermore, the specific surface area within the suitable range can also reduce side reactions between the electrolytic solution and the material, thereby reducing the loss of irreversible capacity.

In any embodiment, the aggregate material includes a first aggregate and a second aggregate. The first aggregate has a particle size Dv50 of 9 to 15 $\mu$m, and the second aggregate has a particle size Dv50 of 4 to 8 $\mu$m.

The particle size Dv50 of the first aggregate and the second aggregate is within a suitable range, resulting in a suitable particle size distribution for the aggregate material. The large and small gaps between the particles are effectively filled, allowing the aggregate material to be tightly packed, thereby increasing the compaction density of the electrode plate and enhancing the energy density of the battery.

In any embodiment, a chemical formula of the first aggregate is $Li_{a1}Ni_{x1}Co_{y1}M1_{1-x1-y1}O_{2-b1}$, a chemical formula of the second aggregate is $Li_{a2}Ni_{x2}Co_{y2}M2_{1-x2-y2}O_{2-b2}$, and $x_1 \geq x_2$, where
$0.6 \leq a1 \leq 1.2, 0.6 \leq x_1 \leq 1, 0 \leq y1 \leq 0.4, -0.1 \leq b1 \leq 0.1, 0.6 \leq a2 \leq 1.2, 0.4 \leq x2 \leq 1, 0 \leq y2 < 0.6, -0.1 \leq b2 \leq 0.1$, and M1 and M2 each independently comprise one or more of Mn, Al, B, Zr, Sr, Y, Sb, W, Ti, Mg, Nb, and Mo.

The first aggregate has a large Dv50 and relatively few lithium-ion reaction active sites. However, high specific capacity can be achieved by increasing the nickel content, thereby increasing the energy density of the battery. The second aggregate has a small particle size Dv50 and relatively more lithium-ion reaction active sites, such that high specific capacity can be achieved with relatively low nickel content. The energy density of the battery is increased through the synergistic effect of the particle size Dv50 of the first aggregate and second aggregate and the nickel content.

In any embodiment, in the chemical formula $Li_{a1}Ni_{x1}Co_{y1}M1_{1-x1-y1}O_{2-b1}$ of the first aggregate, $0.8 \leq a1 \leq 1.2, 0.94 \leq x1 \leq 0.98, 0 \leq y1 \leq 0.06$, and $-0.1 \leq b1 \leq 0.1$.

In any embodiment, in the chemical formula $Li_{a2}Ni_{x2}Co_{y2}M2_{1-x2-y2}O_{2-b2}$ of the second aggregate, $0.8 \leq a2 \leq 1.2, 0.93 \leq x2 \leq 0.96, 0 \leq y2 \leq 0.07$, and $-0.1 \leq b2 \leq 0.1$.

In any embodiment, a particle size of a primary particle of the first aggregate is larger than a particle size of a primary particle of the second aggregate.

Under the condition that the particle size Dv50 of the first aggregate is larger than the particle size Dv50 of the second aggregate, the particle size of the primary particle of the first aggregate is controlled to be larger than the particle size of the primary particle of the second aggregate. This increases the compaction density of the first aggregate, while the relatively small particle size of the primary particle of the second aggregate shortens the lithium-ion migration distance, enhances the ion conductivity and electron conductivity of the second aggregate, and exposes more lithium-ion reaction active sites, which comprehensively increases the energy density and rate capability of the battery.

In any embodiment, the primary particle of the first aggregate has a particle size of 100 to 1000 nm, and the primary particle of the second aggregate has a particle size of 100 to 300 nm.

The suitable range of the particle size of the primary particle of the first aggregate can increase the compaction density of the electrode plate and the energy density of the battery. Meanwhile, the suitable range of the particle size of the primary particle of the second aggregate is beneficial for the specific capacity performance of the second aggregate, thereby improving the rate capability of the battery.

In any embodiment, particle size distribution of the first aggregate and the second aggregate satisfies (Dv90 - Dv10) / Dv50 $\leq$ 1.50.

The first aggregate and the second aggregate have a particle size distribution within a suitable range, reducing the impact of an excessive presence of oversized or undersized particles in the material on the compaction density.

In any embodiment, the particle size distribution of the first aggregate satisfies $0.50 \leq$ (Dv90 - Dv10) / Dv50 $\leq$ 1.30, and the particle size distribution of the second aggregate satisfies $1.30 \leq$ (Dv90 - Dv10) / Dv50 $\leq$ 1.50.

The particle size distribution of the first aggregate is within a suitable range, providing sufficient filling space. The particle size distribution of the second aggregate is within a suitable range, such that the space between the first aggregates can be adequately filled. The first aggregate and the second aggregate act in concert to enhance the compaction density.

In any embodiment, a mass ratio of the first aggregate to the second aggregate is 1: 1 to 9: 1.

The first aggregate has a relatively large particle size Dv50 and serves as a skeleton, while the second aggregate has a relatively small particle size Dv50 and functions to fill the gaps in the skeleton. The mass ratio of the first aggregate to the second aggregate is within a suitable range, ensuring that the positive electrode active material has an appropriate particle size distribution. This can increase the compaction density of the electrode plate and the energy density of the battery.

A second aspect of the present application provides a positive electrode plate, including a positive electrode current collector and a positive electrode film layer disposed on at least one surface of the positive electrode current collector, where the positive electrode film layer includes the positive electrode active material according to the first aspect.

The positive electrode plate has high compaction density, high surface density, and low elongation, which increases the specific capacity of the electrode plate and enhances the service performance and processing performance of the electrode plate.

In any embodiment, the positive electrode active material has a mass content of 95% to 99.5%, based on a total mass of the positive electrode film layer.

The mass content of the positive electrode active material within the above range can enhance the specific capacity of the electrode plate and the energy density of the battery.

In any embodiment, when the positive electrode plate has a compaction density of 3.5 $g/cm^3$ to 3.8 $g/cm^3$, the positive electrode plate has an elongation in a length direction of 7% to 8%.

The elongation of the electrode plate in the length direction within the above range increases the flexibility of the electrode plate, reduces the risk of brittle failure of the electrode plate during the winding or hot pressing process, and enhances the service performance of the electrode plate.

In any embodiment, the positive electrode film layer has a coating surface density of 21.5 $mg/cm^2$ to 32.5 $mg/cm^2$.

The coating surface density of the positive electrode film layer within the above range can enhance the specific capacity of the electrode plate and the energy density of the battery.

In any embodiment, the positive electrode plate has a compaction density of 3.5 $g/cm^3$ to 3.8 $g/cm^3$.

The compaction density of the positive electrode plate within the above range can enhance the specific capacity of the electrode plate and the energy density of the battery.

A third aspect of the present application provides a secondary battery, which includes the positive electrode plate according to the second aspect of the present application.

In any embodiment, the secondary battery includes a lithium-ion battery.

A fourth aspect of the present application provides an electric device, which includes the secondary battery according to the third aspect of the present application.

## BRIEF DESCRIPTION OF THE DRAWINGS

FIG. 1 is a schematic diagram of a secondary battery according to one embodiment of the present application;

FIG. 2 is an exploded view of the secondary battery according to one embodiment of the present application as shown in FIG. 1;

FIG. 3 is a schematic diagram of a battery module according to one embodiment of the present application;

FIG. 4 is a schematic diagram of a battery pack according to one embodiment of the present application;

FIG. 5 is an exploded view of the battery pack according to one embodiment of the present application as shown in FIG. 4; and

FIG. 6 is a schematic diagram of an electric device using a secondary battery as a power source according to one embodiment of the present application.

Description of the reference numerals:
1: battery pack; 2: upper case body; 3: lower case body; 4: battery module; 5: secondary battery; 51: housing; 52: electrode assembly; 53: cover plate.

## DETAILED DESCRIPTION

Hereinafter, embodiments of the binder, the preparation method, the electrode, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The compaction density, plateau voltage, and specific capacity of ternary materials have received widespread attention. The compaction density of the positive electrode plate for ternary materials is typically $\leq 3.3$ g/cm$^3$. When the compaction density exceeds 3.3 g/cm$^3$, excessive compaction of high-nickel ternary positive electrode plates may lead to fracture or cracking of the secondary particle structure, and the exposed fresh interface is prone to side reactions with the electrolytic solution, accelerating the degradation of the cell and reducing the service life and safety performance of the battery. However, if the compaction density of the ternary positive electrode plate is excessively low, its contribution to increasing the energy density of the battery is limited, leading to a reduction in energy density and a decrease in the battery's endurance. Therefore, there is a need to develop a positive electrode active material with high compaction density and high energy density to meet the usage requirements of novel batteries.

[Positive Electrode Active Material]

Based on this, the present application provides a positive electrode active material. The positive electrode active material includes an aggregate material, and a chemical formula of the aggregate material is $Li_aNi_xCo_yM_{1-x-y}O_{2-b}$, where $0.6 \leq a \leq 1$, $0.6 \leq x \leq 1$, $0 \leq y \leq 0.4$, and $-0.1 \leq b \leq 0.1$, and M includes one or more of Mn, Al, B, Zr, Sr, Y, Sb, W, Ti, Mg, Nb, and Mo. A primary particle of the aggregate material has a particle size of 100 to 600 nm, and particle size distribution of the aggregate material satisfies (Dv90 - Dv10) / Dv50 $\geq 1.6$.

The term "aggregate" used herein refers to a cluster of primary particles formed by binding under the influence of interactive forces, and the particles within the aggregate are referred to as primary particles.

The term "primary particle" used herein refers to particles before agglomeration.

The particle size of the primary particle can be measured using methods known in the art. As an example, a sample is cold-pressed before being cut using an Ar particle beam to expose an end surface, and an end surface image of the sample is obtained using a scanning electron microscope (SEM). The size of the primary particles of the sample is measured based on the SEM images. At least three samples are measured, with at least 50 pieces of data measured for each sample, and the mean value is taken as the particle size of the primary particle of the sample.

The term "Dv90" used herein refers to a particle size at which the cumulative volume reaches 90% starting from the small particle size side in a volume-based particle size distribution of the powder.

The term "Dv10" used herein refers to a particle size at which the cumulative volume reaches 10% starting from the small particle size side in a volume-based particle size distribution of the powder.

The term "Dv50" refers to a particle size at which the cumulative volume reaches 50% starting from the small particle size side in a volume-based particle size distribution of the powder.

The volume distribution particle sizes Dv10, Dv50, and Dv90 of the above particle can be measured using methods known in the art. As an example, reference may be made to the GB/T 19077-2016/ISO 13320:2009 *Particle size analysis-Laser diffraction methods,* and the Malvern 3000 device may be used for measurement.

In some embodiments, M includes Mn or Al.

Mn or Al can serve a supporting role, providing stability during the charging and discharging processes, which is conducive to improving safety performance.

In some embodiments, M includes Sb or Nb.

Sb or Nb can contribute to grain refinement, reducing the particle size of the primary particle of the material, thereby further increasing the specific capacity and rate capability of the material.

In some embodiments, M includes Sr.

Sr is a fluxing agent that, when a suitable particle size is prepared, can lower the sintering temperature and reduce the formation of the rock salt phase. This increases both the capacity and cycle life of the material, thereby improving the battery's cycle life.

The chemical formula of the aggregate material can be determined through tests using methods known in the art. As an example, the chemical formula of the aggregate material is determined by measuring the proportion of each element in the material using an inductively coupled plasma (ICP) spectrometer, such as the Spectroblue model.

In some embodiments, the particle size of the primary particle of the aggregate material may be any value selected from 100 nm, 200 nm, 300 nm, 400 nm, 500 nm, and 600 nm, or in a range defined by any two of these values.

In some embodiments, the particle size distribution of the aggregate material satisfies any one of the following conditions: (Dv90 - Dv10) / Dv50 $\geq$ 1.6, (Dv90 - Dv10) / Dv50 $\geq$ 1.7, (Dv90 - Dv10) / Dv50 $\geq$ 1.8, (Dv90 - Dv10) / Dv50 $\geq$ 1.9, (Dv90 - Dv10) / Dv50 $\geq$ 2, (Dv90 - Dv10) / Dv50 $\geq$ 2.1, (Dv90 - Dv10) / Dv50 $\geq$ 2.2, (Dv90 - Dv10) / Dv50 $\geq$ 2.3, and (Dv90 - Dv10) / Dv50 $\geq$ 2.4.

In some embodiments, in the chemical formula $Li_aNi_xCo_yM_{1-x-y}O_{2-b}$, a is any value selected from 0.6, 0.7, 0.8, 0.9, 1.0, 1.1, and 1.2, or in a range defined by any two of these values.

In some embodiments, in the chemical formula $Li_aNi_xCo_yM_{1-x-y}O_{2-b}$, x is any value selected from 0.6, 0.7, 0.8, 0.85, 0.9, 0.93, 0.94, 0.95, 0.96, 0.97, 0.98, 0.99, and 1, or in a range defined by any two of these values.

In some embodiments, in the chemical formula $Li_aNi_xCo_yM_{1-x-y}O_{2-b}$, y is any value selected from 0, 0.01, 0.02, 0.03, 0.04, 0.05, 0.06, 0.07, 0.1, 0.15, 0.2, 0.3, and 0.4, or in a range defined by any two of these values.

In some embodiments, in the chemical formula $Li_aNi_xCo_yM_{1-x-y}O_{2-b}$, b is any value selected from -0.1, 0, and 0.1, or in a range defined by any two of these values.

The aggregate material is controlled to have a broader particle size distribution, with large and small particles fitting together to fill gaps, such that the gaps between particles and the volume utilization rate can be increased. This results in a more compact particle packing in the positive electrode active material, enhancing the compressive resistance of the electrode plate and increasing the compaction density of the electrode plate and the energy density of the lithium-ion battery. Meanwhile, by controlling the size of the primary particles in the aggregate material within a suitable range, the lithium-ion migration distance is shortened, a large number of lithium-ion active sites are exposed, and the specific capacity of the material is enhanced. The battery exhibits excellent rate capability, thereby increasing the energy density of the material. In addition, the dense packing of the aggregate material can also prevent particle displacement in the electrode plate under high pressure, resulting in low elongation and improved flexibility of the electrode plate.

In some embodiments, in the chemical formula $Li_aNi_xCo_yM_{1-x-y}O_{2-b}$, $0.6 \leq a \leq 1.2$, $0.8 \leq x \leq 1$, $0 \leq y \leq 0.2$, and $-0.1 \leq b \leq 0.1$.

In some embodiments, in the chemical formula $Li_aNi_xCo_yM_{1-x-y}O_{2-b}$, a is any value selected from 0.6, 0.7, 0.8, 0.9, 1.0, 1.1, and 1.2, or in a range defined by any two of these values.

In some embodiments, in the chemical formula $Li_aNi_xCo_yM_{1-x-y}O_{2-b}$, x is any value selected from 0.8, 0.85, 0.9, 0.93, 0.94, 0.95, 0.96, 0.97, 0.98, 0.99, and 1, or in a range defined by any two of these values.

In some embodiments, in the chemical formula $Li_aNi_xCo_yM_{1-x-y}O_{2-b}$, y is any value selected from 0, 0.01, 0.02, 0.03, 0.04, 0.05, 0.06, 0.07, 0.1, 0.15, and 0.2, or in a range defined by any two of these values.

In some embodiments, in the chemical formula $Li_aNi_xCo_yM_{1-x-y}O_{2-b}$, b is any value selected from -0.1, 0, and 0.1, or in a range defined by any two of these values.

In some embodiments, in the chemical formula $Li_aNi_xCo_yM_{1-x-y}O_{2-b}$, $0.8 \leq a \leq 1.2$, $0.93 \leq x \leq 0.98$, $0 \leq y \leq 0.07$, and $-0.1 \leq b \leq 0.1$.

In some embodiments, in the chemical formula $Li_aNi_xCo_yM_{1-x-y}O_{2-b}$, a is any value selected from 0.8, 0.9, 1.0, 1.1, and 1.2, or in a range defined by any two of these values.

In some embodiments, in the chemical formula $Li_aNi_xCo_yM_{1-x-y}O_{2-b}$, x is any value selected from 0.93, 0.94, 0.95, 0.96, 0.97, and 0.98, or in a range defined by any two of these values.

In some embodiments, in the chemical formula $Li_aNi_xCo_yM_{1-x-y}O_{2-b}$, y is any value selected from 0, 0.01, 0.02, 0.03, 0.04, 0.05, 0.06, and 0.07, or in a range defined by any two of these values.

In some embodiments, in the chemical formula $Li_aNi_xCo_yM_{1-x-y}O_{2-b}$, b is any value selected from -0.1, 0, and 0.1, or in a range defined by any two of these values.

When the chemical formula is in the above range, the aggregate has a high specific capacity, and the battery exhibits a high energy density.

In some embodiments, the primary particle of the aggregate material has a particle size of 200 to 500 nm.

In some embodiments, the particle size of the primary particle of the aggregate material is any value selected from 200 nm, 300nm, 400 nm, and 500 nm, or in a range defined by any two of these values.

The particle size of the primary particle of the aggregate material is within a suitable range, exposing more lithium-ion reaction active sites, thereby increasing the specific capacity of the aggregate material and the energy density of the battery. Side reactions between the electrolytic solution and the material can also be reduced, thereby reducing the loss of irreversible capacity.

In some embodiments, the aggregate material has a particle size Dv50 of 6 to 15 μm. In some embodiments, the particle size Dv50 of the aggregate material is any value selected from 6 μm, 7 μm, 8 μm, 9 μm, 10 μm, 11 μm, 12 μm, 13 μm, 14 μm, and 15 μm, or in a range defined by any two of these values.

The particle size Dv50 of the aggregate material is within a suitable range, which is conducive to achieving a high compaction density for the positive electrode plate and increases the energy density of the battery. Additionally, the appropriate Dv50 of the aggregate material can enhance ion conductivity and electron conductivity, thereby improving the rate capability of the battery.

In some embodiments, the aggregate material has a particle size Dv50 of 7-13 μm. In some embodiments, the particle size Dv50 of the aggregate material is any value selected from 7 μm, 8 μm, 9 μm, 10 μm, 11 μm, 12 μm, and 13 μm, or in a range defined by any two of these values.

The particle size Dv50 of the aggregate material is within a suitable range, which is conducive to achieving a high compaction density for the positive electrode plate and increases the energy density of the battery.

In some embodiments, a particle size distribution graph of the aggregate material, as determined by particle size analysis-laser diffraction methods, is unimodal, with a unimodal peak position ranging from 6 to 15 μm.

Herein, reference is made to the GB/T 19077-2016/ISO 13320:2009 *Particle size analysis-Laser diffraction methods,* and the Malvern 3000 device is used for measurement, to obtain a particle size distribution graph based on the volume distribution. The unimodal peak position is determined based on the particle size distribution graph.

In some embodiments, the unimodal peak position is at any value selected from 6 μm, 7 μm, 8 μm, 9 μm, 10 μm, 11 μm, 12 μm, 13 μm, 14 μm, and 15 μm, or within a range defined by any two of these values.

The particle size distribution graph of the aggregate material is unimodal, with the unimodal peak position within a suitable range. This contributes to a high compaction density for the positive electrode plate and increases the energy density of the battery. Additionally, the unimodal peak position within the suitable range indicates that the material has an appropriate particle size, which enhances ion conductivity and electron conductivity of the material, thereby improving the rate capability of the battery.

In some embodiments, the unimodal peak position is at 7 to 13 μm. In some embodiments, the unimodal peak position is at any value selected from 7 μm, 8 μm, 9 μm, 10 μm, 11 μm, 12 μm, and 13 μm, or within a range defined by any two of these values.

The unimodal peak position is within a suitable range, which is conducive to achieving a high compaction density for the positive electrode plate and increases the energy density of the battery.

In some embodiments, the particle size distribution of the aggregate material satisfies $1.6 \leq (Dv90 - Dv10)/Dv50 \leq 2.3$. In some embodiments, the particle size distribution of the aggregate material satisfies any one of the following conditions: $1.6 \leq (Dv90 - Dv10)/Dv50 \leq 1.7$, $1.6 \leq (Dv90 - Dv10)/Dv50 \leq 1.8$, $1.6 \leq (Dv90 - Dv10)/Dv50 \leq 1.9$, $1.6 \leq (Dv90 - Dv10)/Dv50 \leq 2.0$, $1.6 \leq (Dv90 - Dv10)/Dv50 < 2.1$, $1.6 \leq (Dv90 - Dv10)/Dv50 \leq 2.2$, $1.6 \leq (Dv90 - Dv10)/Dv50 < 2.3$, $1.7 \leq (Dv90 - Dv10)/Dv50 \leq 1.8$, $1.7 \leq (Dv90 - Dv10)/Dv50 \leq 1.9$, $1.7 \leq (Dv90 - Dv10)/Dv50 \leq 2.0$, $1.7 \leq (Dv90 - Dv10)/Dv50 \leq 2.1$, $1.7 \leq (Dv90 - Dv10)/Dv50 \leq 2.2$, $1.7 \leq (Dv90 - Dv10)/Dv50 < 2.3$, $1.8 \leq (Dv90 - Dv10)/Dv50 \leq 1.9$, $1.8 \leq (Dv90 - Dv10)/Dv50 \leq 2.0$, $1.8 \leq (Dv90 - Dv10)/Dv50 \leq 2.1$, $1.8 \leq (Dv90 - Dv10)/Dv50 \leq 2.2$, $1.8 \leq (Dv90 - Dv10)/Dv50 \leq 2.3$, $1.9 \leq (Dv90 - Dv10)/Dv50 \leq 2.0$, $1.9 \leq (Dv90 - Dv10)/Dv50 \leq 2.1$, $1.9 \leq (Dv90 - Dv10)/Dv50 < 2.2$, $1.9 \leq (Dv90 - Dv10)/Dv50 \leq 2.3$, $2.0 \leq (Dv90 - Dv10)/Dv50 \leq 2.1$, $2.0 \leq (Dv90 - Dv10)/Dv50 \leq 2.2$, $2.0 \leq (Dv90 - Dv10)/Dv50 \leq 2.3$, $2.1 \leq (Dv90 - Dv10)/Dv50 \leq 2.2$, $2.1 \leq (Dv90 - Dv10)/Dv50 \leq 2.3$, and $2.2 \leq (Dv90 - Dv10)/Dv50 \leq 2.3$.

The particle size distribution of the aggregate material is within a suitable range. In one aspect, the compaction density of the electrode plate can be enhanced through the gradation of large and small particle sizes, thereby increasing the energy density of the battery. In another aspect, the appropriate particle size distribution reduces the impact of an excessive presence of oversized or undersized particles in the material on the compaction density, and can also prevent the pulverization of undersized particles during the cycling process, which would otherwise lead to deterioration of the cell. Additionally, the excessive presence of oversized or undersized particles can negatively affect the preparation of the positive electrode slurry, making it prone to gelling and impacting the processing performance of the slurry.

In some embodiments, the particle size distribution of the aggregate material satisfies $1.8 \leq (Dv90 - Dv10)/Dv50$

≤ 2.1. In some embodiments, the particle size distribution of the aggregate material satisfies any one of the following conditions: $1.8 \leq (Dv90 - Dv10) / Dv50 \leq 1.9$, $1.8 \leq (Dv90 - Dv10) / Dv50 \leq 2.0$, $1.8 \leq (Dv90 - Dv10) / Dv50 \leq 2.1$, $1.9 \leq (Dv90 - Dv10) / Dv50 \leq 2.0$, $1.9 \leq (Dv90 - Dv10) / Dv50 \leq 2.1$, and $2.0 \leq (Dv90 - Dv10) / Dv50 \leq 2.1$.

The particle size distribution of the aggregate is within a suitable range, and the positive electrode plate has an appropriate compaction density, thereby increasing the energy density of the battery.

In some embodiments, the aggregate material has a specific surface area of 0.5 m2/g to 0.9 m2/g. In some embodiments, the specific surface area of the aggregate material may be any value selected from 0.5 m2/g, 0.6 m2/g, 0.7 m2/g, 0.8 m2/g, and 0.9 m2/g, or in a range defined by any two of these values.

The specific surface area can be measured using any means known in the art. As an example, reference may be made to GB/T 19587-2017 *Determination of the specific surface area of solids by gas adsorption using the BET method,* and the device TriStar II 3020 may be used for measurement.

The specific surface area of the aggregate material is within a suitable range, shortening the lithium-ion migration distance and improving the rate capability of the battery. Additionally, the appropriate specific surface area can expose more lithium-ion reaction active sites, enhancing the specific capacity of the electrode plate and increasing the energy density of the battery. Furthermore, the specific surface area within the suitable range can also reduce side reactions between the electrolytic solution and the material, thereby reducing the loss of irreversible capacity.

In some embodiments, the aggregate material includes a first aggregate and a second aggregate. The first aggregate has a particle size Dv50 of 9 to 15 μm, and the second aggregate has a particle size Dv50 of 4 to 8 μm.

In some embodiments, the particle size Dv50 of the first aggregate is any value selected from 9 μm, 11 μm, 12 μm, 13 μm, 14 μm, and 15 μm, or in a range defined by any two of these values.

In some embodiments, the particle size Dv50 of the second aggregate is any value selected from 4 μm, 5 μm, 6 μm, 7 μm, and 8 μm, or in a range defined by any two of these values.

For the particle size Dv50 of the first aggregate and second aggregate, reference may be made to the test method for the particle size Dv50 of the aggregate material.

The first aggregates with a relatively large particle size Dv50 can serve as the skeleton of the electrode plate, and the appropriate particle size Dv50 can prevent cracks at the edges of large particles, thereby increasing the battery's service life; the second aggregates with a relatively small particle size Dv50 can serve as fillers for the skeleton of the first aggregate, improving space utilization.

The particle size Dv50 of the first aggregate and the second aggregate is within a suitable range, resulting in a suitable particle size distribution for the aggregate material. The large and small gaps between the particles are effectively filled, allowing the aggregate material to be tightly packed, thereby increasing the compaction density of the electrode plate and enhancing the energy density of the battery.

In some embodiments, a chemical formula of the first aggregate is $Li_{a1}Ni_{x1}Co_{y1}M1_{1-x1-y1}O_{2-b1}$, a chemical formula of the second aggregate is $Li_{a2}Ni_{x2}Co_{y2}M2_{1-x2-y2}O_{2-b2}$, and $x_1 \geq x_2$, where $0.6 \leq a1 \leq 1.2$, $0.6 \leq x1 \leq 1$, $0 \leq y1 \leq 0.4$, $-0.1 \leq b1 \leq 0.1$, $0.6 \leq a2 \leq 1.2$, $0.4 \leq x2 \leq 1$, $0 \leq y2 \leq 0.6$, $-0.1 \leq b2 \leq 0.1$, and M1 and M2 each independently comprise one or more of Mn, Al, B, Zr, Sr, Y, Sb, W, Ti, Mg, Nb, and Mo.

In some embodiments, M1 and M2 each independently include Mn or Al.

In some embodiments, in the chemical formula $Li_{a1}Ni_{x1}Co_{y1}M1_{1-x1-y1}O_{2-b1}$, a1 is any value selected from 0.6, 0.7, 0.8, 0.9, 1.0, 1.1, and 1.2, or in a range defined by any two of these values.

In some embodiments, in the chemical formula $Li_{a1}Ni_{x1}Co_{y1}M1_{1-x1-y1}O_{2-b1}$, x1 is any value selected from 0.6, 0.7, 0.8, 0.85, 0.9, 0.93, 0.94, 0.95, 0.96, 0.97, 0.98, 0.99, and 1, or in a range defined by any two of these values.

In some embodiments, in the chemical formula $Li_{a1}Ni_{x1}Co_{y1}M1_{1-x1-y1}O_{2-b1}$, y1 is any value selected from 0, 0.01, 0.02, 0.03, 0.04, 0.05, 0.06, 0.07, 0.1, 0.15, 0.2, 0.3, and 0.4, or in a range defined by any two of these values.

In some embodiments, in the chemical formula $Li_{a1}Ni_{x1}Co_{y1}M1_{1-x1-y1}O_{2-b1}$, b1 is any value selected from -0.1, 0, and 0.1, or in a range defined by any two of these values.

In some embodiments, in the chemical formula $Li_{a2}Ni_{x2}Co_{y2}M2_{1-x2-y2}O_{2-b2}$, a2 is any value selected from 0.6, 0.7, 0.8, 0.9, 1.0, 1.1, and 1.2, or in a range defined by any two of these values.

In some embodiments, in the chemical formula $Li_{a2}Ni_{x2}Co_{y2}M2_{1-x2-y2}O_{2-b2}$, x2 is any value selected from 0.4, 0.5, 0.6, 0.7, 0.8, 0.85, 0.9, 0.93, 0.94, 0.95, 0.96, 0.97, 0.98, 0.99, and 1, or in a range defined by any two of these values.

In some embodiments, in the chemical formula $Li_{a2}Ni_{x2}Co_{y2}M2_{1-x2-y2}O_{2-b2}$, y2 is any value selected from 0, 0.01, 0.02, 0.03, 0.04, 0.05, 0.06, 0.07, 0.1, 0.15, 0.2, 0.3, 0.4, 0.5, and 0.6, or in a range defined by any two of these values.

In some embodiments, in the chemical formula $Li_{a2}Ni_{x2}Co_{y2}M1_{1-x2-y2}O_{2-b2}$, b2 is any value selected from 0.1, 0, and 0.1, or in a range defined by any two of these values.

For the determination of the chemical formulas of the first aggregate and the second aggregate, reference may be made to the test method for determining the chemical formula of the aggregate material.

The first aggregate has a large particle size Dv50 and relatively few lithium-ion reaction active sites. High specific capacity can be achieved by increasing the nickel content, thereby increasing the energy density of the battery. The second aggregate has a small particle size Dv50 and relatively more lithium-ion reaction active sites, such that high specific capacity can be achieved with relatively low nickel content. The energy density of the battery is increased through the synergistic effect of the particle size Dv50 of the first aggregate and second aggregate and the nickel content.

In some embodiments, in the chemical formula $Li_{a1}Ni_{x1}Co_{y1}M1_{1-x1-y1}O_{2-b1}$ of the first aggregate, $0.8 \leq a1 \leq 1.2$, $0.94 \leq x1 \leq 0.98$, $0 \leq y1 \leq 0.06$, and $-0.1 \leq b1 \leq 0.1$.

In some embodiments, a1 is any value selected from 0.8, 0.9, 1.0, 1.1, and 1.2, or in a range defined by any two of these values.

In some embodiments, x1 is any value selected from 0.94, 0.95, 0.96, 0.97, and 0.98, or in a range defined by any two of these values.

In some embodiments, y1 is any value selected from 0, 0.01, 0.02, 0.03, 0.04, 0.05, and 0.06, or in a range defined by any two of these values.

In some embodiments, b1 is any value selected from -0.1, 0, and 0.1, or in a range defined by any two of these values.

In some embodiments, in the chemical formula $Li_{a2}Ni_{x2}Co_{y2}M2_{1-x2-y2}O_{2-b2}$ of the second aggregate, $0.8 \leq a2 < 1.2$, $0.93 \leq x2 \leq 0.96$, $0 \leq y2 \leq 0.07$, and

$$-0.1 \leq b2 \leq 0.1.$$

In some embodiments, a2 is any value selected from 0.8, 0.9, 1.0, 1.1, and 1.2, or in a range defined by any two of these values.

In some embodiments, x2 is any value selected from 0.93, 0.94, 0.95, and 0.96, or in a range defined by any two of these values.

In some embodiments, y2 is any value selected from 0, 0.01, 0.02, 0.03, 0.04, 0.05, 0.06, and 0.07, or in a range defined by any two of these values.

In some embodiments, b2 is any value selected from -0.1, 0, and 0.1, or in a range defined by any two of these values.

The chemical formulas of the first aggregate and the second aggregate are within the above range, the first aggregate and the second aggregate have a high specific capacity, and the battery exhibits a high energy density.

In some embodiments, a particle size of a primary particle of the first aggregate is larger than a particle size of a primary particle of the second aggregate.

Under the condition that the particle size Dv50 of the first aggregate is larger than the particle size Dv50 of the second aggregate, the particle size of the primary particle of the first aggregate is controlled to be larger than the particle size of the primary particle of the second aggregate. This increases the compaction density of the first aggregate, while the relatively small particle size of the primary particle of the second aggregate shortens the lithium-ion migration distance, enhances the ion conductivity and electron conductivity of the second aggregate, and exposes more lithium-ion reaction active sites, which comprehensively increases the energy density and rate capability of the battery.

In some embodiments, the primary particle of the first aggregate has a particle size of 100 to 1000 nm, and the primary particle of the second aggregate has a particle size of 100 to 300 nm.

In some embodiments, the particle size of the primary particle of the first aggregate is any value selected from 100 nm, 200 nm, 300 nm, 400 nm, 500 nm, 600 nm, 700 nm, 800 nm, 900 nm, and 1000 nm, or in a range defined by any two of these values.

In some embodiments, the particle size of the primary particle of the second aggregate is any value selected from 100 nm, 150 nm, 200 nm, 250 nm, and 300 nm, or in a range defined by any two of these values.

For the measurement of the particle size of the primary particles of the first aggregate and the second aggregate, reference may be made to the test method for the particle size of the primary particle of the aggregate material.

The suitable range of the particle size of the primary particle of the first aggregate can increase the compaction density of the electrode plate and the energy density of the battery. Meanwhile, the suitable range of the particle size of the primary particle of the second aggregate is beneficial for the specific capacity performance of the second aggregate, thereby improving the rate capability of the battery.

In some embodiments, particle size distribution of the first aggregate and the second aggregate satisfies (Dv90 - Dv10) / Dv50 $\leq$ 1.50.

In some embodiments, the particle size distribution of the first aggregate satisfies any one of the following conditions: (Dv90 - Dv10) / Dv50 $\leq$ 0.4, (Dv90 - Dv10) / Dv50 $\leq$ 0.5, (Dv90 - Dv10) / Dv50 < 0.6, (Dv90 - Dv10) / Dv50 < 0.7, (Dv90 - Dv10) / Dv50 < 0.8, (Dv90 - Dv10) / Dv50 $\leq$ 0.9, (Dv90 - Dv10) / Dv50 $\leq$ 1.0, (Dv90 - Dv10) / Dv50 $\leq$ 1.1, (Dv90 - Dv10) / Dv50 $\leq$ 1.2, (Dv90 - Dv10) / Dv50 $\leq$ 1.3, (Dv90 - Dv10) / Dv50 $\leq$ 0.4, and 0.6 $\leq$ (Dv90 - Dv10) / Dv50 $\leq$ 1.5.

In some embodiments, the particle size distribution of the second aggregate satisfies any one of the following conditions: (Dv90 - Dv10) / Dv50 < 0.4, (Dv90 - Dv10) / Dv50 < 0.5, (Dv90 - Dv10) / Dv50 < 0.6, (Dv90 - Dv10) / Dv50 < 0.7, (Dv90 - Dv10) / Dv50 < 0.8, (Dv90 - Dv10) / Dv50 $\leq$ 0.9, (Dv90 - Dv10) / Dv50 $\leq$ 1.0, (Dv90 - Dv10) / Dv50 $\leq$ 1.1, (Dv90 - Dv10) / Dv50 ≤ 1.2, (Dv90 - Dv10) / Dv50 ≤ 1.3, (Dv90 - Dv10) / Dv50 ≤ 0.4, and 0.6 ≤ (Dv90 - Dv10) / Dv50 ≤ 1.5.

For the determination of the particle size distribution of the first aggregate and the second aggregate, reference may be made to the test method for the aggregate material.

The first aggregate and the second aggregate have a particle size distribution within a suitable range, reducing the impact of an excessive presence of oversized or undersized particles in the material on the compaction density. As a result, the battery has a high compaction density and a high energy density.

In some embodiments, the particle size distribution of the first aggregate satisfies 0.50 ≤ (Dv90 - Dv10) / Dv50 ≤ 1.30, and the particle size distribution of the second aggregate satisfies 1.30 ≤ (Dv90 - Dv10) / Dv50 ≤ 1.50.

In some embodiments, the particle size distribution of the first aggregate satisfies any one of the following conditions: 0.50 < (Dv90 - Dv10) / Dv50 < 0.6, 0.50 < (Dv90 - Dv10) / Dv50 ≤ 0.7, 0.50 < (Dv90 - Dv10) / Dv50 ≤ 0.8, 0.50 < (Dv90 - Dv10) / Dv50 ≤ 0.9, 0.50 ≤ (Dv90 - Dv10) / Dv50 ≤ 1.0, 0.50 ≤ (Dv90 - Dv10) / Dv50 < 1.1, 0.50 ≤ (Dv90 - Dv10) / Dv50 ≤ 1.2, 0.50 ≤ (Dv90 - Dv10) / Dv50 ≤ 1.3, 0.6 ≤ (Dv90 - Dv10) / Dv50 ≤ 0.7, 0.6 ≤ (Dv90 - Dv10) / Dv50 ≤ 0.8, 0.6 ≤ (Dv90 - Dv10) / Dv50 < 0.9, 0.6 ≤ (Dv90 - Dv10) / Dv50 ≤ 1.0, 0.6 ≤ (Dv90 - Dv10) / Dv50 ≤ 1.1, 0.6 ≤ (Dv90 - Dv10) / Dv50 < 1.2, 0.6 ≤ (Dv90 - Dv10) / Dv50 ≤ 1.3, 0.7 ≤ (Dv90 - Dv10) / Dv50 ≤ 0.8, 0.7 ≤ (Dv90 - Dv10) / Dv50 ≤ 0.9, 0.7 ≤ (Dv90 - Dv10) / Dv50 ≤ 1.0, 0.7 < (Dv90 - Dv10) / Dv50 ≤ 1.1, 0.7 ≤ (Dv90 - Dv10) / Dv50 ≤ 1.2, 0.7 ≤ (Dv90 - Dv10) / Dv50 ≤ 1.3, 0.8 ≤ (Dv90 - Dv10) / Dv50 < 0.9, 0.8 ≤ (Dv90 - Dv10) / Dv50 ≤ 1.0, 0.8 ≤ (Dv90 - Dv10) / Dv50 ≤ 1.1, 0.8 ≤ (Dv90 - Dv10) / Dv50 ≤ 1.2, 0.8 ≤ (Dv90 - Dv10) / Dv50 ≤ 1.3, 0.9 < (Dv90 - Dv10) / Dv50 ≤ 1.0, 0.9 ≤ (Dv90 - Dv10) / Dv50 ≤ 1.1, 0.9 ≤ (Dv90 - Dv10) / Dv50 < 1.2, 0.9 ≤ (Dv90 - Dv10) / Dv50 ≤ 1.3, 1 ≤ (Dv90 - Dv10) / Dv50 ≤ 1.1, 1 ≤ (Dv90 - Dv10) / Dv50 ≤ 1.2, 1 ≤ (Dv90 - Dv10) / Dv50 ≤ 1.3, 1.1 ≤ (Dv90 - Dv10) / Dv50 ≤ 1.2, 1.1 ≤ (Dv90 - Dv10) / Dv50 ≤ 1.3, and 1.2 < (Dv90 - Dv10) / Dv50 ≤ 1.3.

In some embodiments, the particle size distribution of the second aggregate satisfies 1.30 ≤ (Dv90 - Dv10) / Dv50 ≤ 1.50.

In some embodiments, the particle size distribution of the second aggregate satisfies any one of the following conditions: 1.30 ≤ (Dv90 - Dv10) / Dv50 ≤ 1.40, 1.30 ≤ (Dv90 - Dv10) / Dv50 ≤ 1.5, and 1.40 < (Dv90 - Dv10) / Dv50 ≤ 1.50.

The particle size distribution of the first aggregate is within a suitable range, providing sufficient filling space. The particle size distribution of the second aggregate is within a suitable range, such that the space between the first aggregates can be adequately filled. The first aggregate and the second aggregate act in concert to enhance the compaction density and the energy density of the battery.

In some embodiments, a mass ratio of the first aggregate to the second aggregate is 1:1 to 9: 1.

In some embodiments, the mass ratio of the first aggregate to the second aggregate is any value selected from 1:1, 2:1, 3:1, 4:1, 5:1, 5:1, 7:1, 8:1, and 9:1, or in a range defined by any two of these values.

The first aggregate has a relatively large particle size Dv50 and serves as a skeleton, while the second aggregate has a relatively small particle size Dv50 and functions to fill the gaps in the skeleton. The mass ratio of the first aggregate to the second aggregate is within a suitable range, ensuring that the positive electrode active material has an appropriate particle size distribution. This can increase the compaction density of the electrode plate and the energy density of the battery. Meanwhile, the small-sized second aggregate has relatively low mechanical strength and is more prone to crushing under the action of a compression roller. An appropriate mass ratio of the first aggregate to the second aggregate can improve the structural stability of the material and enhance the safety performance of the battery.

In some embodiments, the positive electrode active material has a specific capacity of 230 to 245 mAh/g.

The specific capacity of the positive electrode active material can be tested by any means known in the art. As an example, the secondary battery is discharged at a constant current of 0.33 C to 2.8 V and allowed to stand for 30 min, then charged at a constant current of 0.33 C to 4.25 V, followed by constant voltage charging at 0.05 C until the voltage stabilizes, and allowed to stand for 30 min. The battery is then discharged at a constant current of 0.33 C to 2.8 V, at which point the discharge capacity is read. The ratio of the first discharge capacity of the secondary battery to the mass of the positive electrode active material is calculated and recorded as the specific capacity of the positive electrode active material, where 1 C = 230 mAh.

[Positive Electrode Plate]

The positive electrode plate includes a positive electrode current collector and a positive electrode film layer formed on at least a portion of the surface of the positive electrode current collector, where the positive electrode film layer includes the positive electrode active material according to some embodiments.

The positive electrode plate has high compaction density, high surface density, and low elongation, which increases the specific capacity of the electrode plate and enhances the service performance and processing performance of the electrode plate.

In some embodiments, the positive electrode active material has a mass content of 95% to 99.5%, based on a total mass of the positive electrode film layer. In some embodiments, the mass content of the positive electrode active material is any value selected from 95%, 96%, 97%, 98%, 99%, and 99.5%, or in a range defined by any two of these values, based on the total mass of the positive electrode film layer.

The mass content of the positive electrode active material within the above range can enhance the specific capacity of the electrode plate and the energy density of the battery.

In some embodiments, when the positive electrode plate has a compaction density of 3.5 $g/cm^3$ to 3.8 $g/cm^3$, the positive electrode plate has an elongation in a length direction of 7% to 8%. In some embodiments, the elongation of the positive electrode plate in the length direction is any value selected from 7%, 7.5%, and 8%, or in a range defined by any two of these values.

The elongation of the positive electrode plate in the length direction can be tested by any means known in the art. As an example, a 1 m long positive electrode plate before cold pressing is taken, with markings made at both endpoints, and the pressure is adjusted to achieve the target compaction density. After cold pressing, the distance between the two endpoints of the positive electrode plate is measured and recorded as L. The elongation of the positive electrode plate is calculated as $(L-1)/1 \times 100\%$.

The elongation of the electrode plate in the length direction within the above range increases the flexibility of the electrode plate, reduces the risk of brittle failure of the electrode plate during the winding or hot pressing process, and enhances the service performance of the electrode plate.

In some embodiments, the positive electrode film layer has a coating surface density of 21.5 $mg/cm^2$ to 32.5 $mg/cm^2$. In some embodiments, the coating surface density of the positive electrode film layer is any value selected from 21.5 $mg/cm^2$, 24 $mg/cm^2$, 26 $mg/cm^2$, 28 $mg/cm^2$, 30 $mg/cm^2$, 32 $mg/cm^2$, and 32.5 $mg/cm^2$, or in a range defined by any two of these values.

The coating surface density of the positive electrode film layer is tested by any means known in the art. As an example, the coating surface density of the positive electrode film layer is determined by measuring the coating weight (g) and coating area ($cm^2$) (with more than 14 sampling points) of the positive electrode film layer on one side. Specifically, the coating surface density of the positive electrode film layer is calculated as the coating weight (g) of the positive electrode film layer on one side divided by the coating area ($cm^2$) of the positive electrode film layer.

The coating surface density of the positive electrode film layer within the above range can enhance the specific capacity of the electrode plate and the energy density of the battery.

In some embodiments, the positive electrode plate has a compaction density of 3.5 $g/cm^3$ to 3.8 $g/cm^3$. In some embodiments, the compaction density of the positive electrode plate is any value selected from 3.5 $g/cm^3$, 3.6 $g/cm^3$, 3.7 $g/cm^3$, and 3.8 $g/cm^3$, or in a range defined by any two of these values.

The compaction density of the positive electrode plate can be tested by any means known in the art. As an example, the compaction density PD of the positive electrode plate is determined by measuring the surface density ($g/cm^2$) and thickness (cm) (with more than 14 sampling points) of the positive electrode film layer on one side. Specifically, the compaction density PD of the positive electrode plate is calculated as the surface density ($g/cm^2$) of the positive electrode film layer on one side divided by the thickness (cm) of the positive electrode film layer.

The compaction density of the positive electrode plate within the above range can enhance the specific capacity of the electrode plate and the energy density of the battery.

The positive electrode active material layer may further include a conductive agent to improve the conductive property of the positive electrode. The conductive agent is optionally one or more of super P, acetylene black, carbon black, Ketjen black, a carbon dot, a carbon nanotube, graphite, graphene, and a carbon nanofiber.

The positive electrode active material layer may further include a binder to firmly bond the positive electrode active material and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethyl cellulose (CMC), sodium alginate (SA), polymethacrylic acid (PMA), and carboxymethyl chitosan (CMCS).

The positive electrode current collector may be made of a conductive carbon plate, a metal foil, a carbon-coated metal foil, a porous metal plate, or a composite current collector. The conductive carbon material of the conductive carbon plate is optionally one or more of super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

A negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

[Separation Film]

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

[Secondary Battery]

In some embodiments, the secondary battery has an energy density of 360 to 510 Wh/kg.

In some embodiments, the energy density of the secondary battery is any value selected from 360 Wh/kg, 380 Wh/kg, 400 Wh/kg, 420 Wh/kg, 440 Wh/kg, 460 Wh/kg, 480 Wh/kg, 500 Wh/kg, and 510 Wh/kg, or in a range defined by any two of these values.

The energy density of the secondary battery is tested by any means known in the art. As an example, the battery cell is allowed to stand at 25 °C for 2 h to ensure that the temperature of the battery cell is 25 °C. At 25 °C, the battery cell is charged at 0.1 C to a charge cut-off voltage, and constant-voltage charging is continued at the charge cut-off voltage until the current reaches 0.05 C, at which point charging is terminated (where C represents the rated capacity of the battery cell). The battery cell is allowed to stand at 25 °C for 1 h. At 25 °C, the battery cell is discharged at 0.1 C to a discharge cut-off voltage, and the total discharge capacity and total discharge energy of the battery cell are recorded as C0 and E0, respectively.

Battery cell weight measurement: The battery cell is placed on an electronic balance until the weight stabilizes, and the battery cell weight M0 is recorded.

Energy density calculation: The energy density of the battery cell is calculated as the battery cell discharge energy E0 divided by the battery cell weight M0.

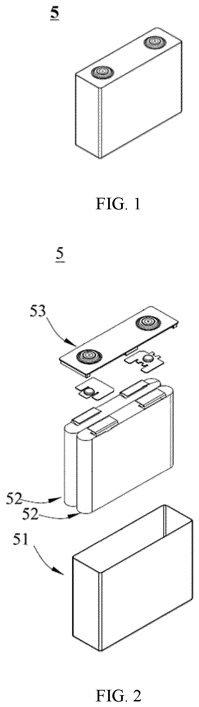

The present application does not particularly limit the shape of the secondary battery, and it may have a cylindrical shape, a prismatic shape, or any other shape. For example, FIG. 1 shows a secondary battery 5 having a prismatic structure as one example, and FIG. 2 shows an exploded view of the secondary battery 5.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The non-Newtonian fluid electrolyte composition is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

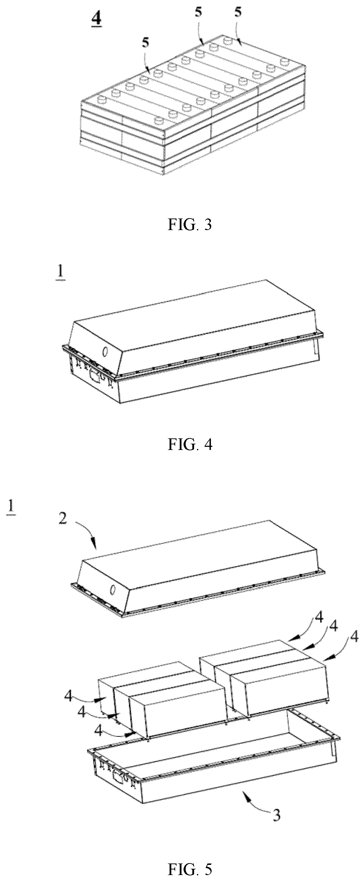

FIG. 3 shows a battery module 3 as one example. Referring to FIG. 3, in the battery module 3, a plurality of secondary batteries 5 may be sequentially arranged in a length direction of the battery module 3. Certainly, the arrangement may also be in any other manner. Further, the plurality of secondary batteries 5 may be fixed by a fastener.

Optionally, the battery module 3 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

[Electric Device]

In one embodiment of the present application, provided is an electric device, which includes at least one of the secondary battery according to any embodiment, the battery module according to any embodiment, or the battery pack according to any embodiment.

The electric device includes at least one of the secondary battery, the battery module, or the battery pack provided in the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its usage requirements.

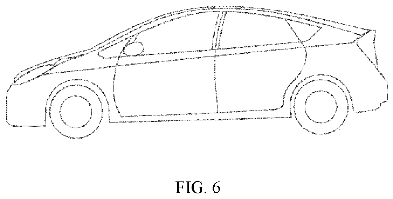

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

## Examples

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

Example 1

1) Preparation of aggregate materials

The first aggregate: Lithium hydroxide and $Ni_{0.94}Co_{0.05}Mn_{0.01}(OH)_2$ were placed into a mixer, mixed uniformly, and sintered at 750 °C for 20 h in an oxygen atmosphere to obtain the first aggregate, with a molar ratio of the added lithium hydroxide to $Ni_{0.94}Co_{0.05}Mn_{0.01}(OH)_2$ of 1.04:1.

The second aggregate: Lithium hydroxide and $Ni_{0.93}Co_{0.05}Mn_{0.02}(OH)_2$ were placed into a mixer, mixed uniformly, and sintered at 800 °C for 20 h in an oxygen atmosphere to obtain the second aggregate, with a molar ratio of the added lithium hydroxide to $Ni_{0.93}CO_{0.05}Mn_{0.02}(OH)_2$ of 1.05:1.

The first aggregate and the second aggregate were mixed in a mass ratio of 7:3 to form an aggregate material.

2) Preparation of positive electrode plate

The aggregate material prepared in Example 1 was placed into a 5 L stirring tank, and a conductive agent acetylene black (SP) and a binder polyvinylidene fluoride (PVDF) were added and premixed for 30 min. A solvent N-methylpyrrolidone (NMP) was then added, and the mixture was rapidly stirred under vacuum to form a slurry. The mass ratio of the aggregate material: acetylene black: polyvinylidene fluoride was 96:2:2, and the solid content of the slurry was 70%. Two surfaces of a positive electrode current collector with a thickness of 12 $\mu$m were uniformly coated with the slurry, followed by drying, cold pressing, and cutting to obtain the positive electrode plate.

3) Preparation of negative electrode plate

Negative electrode active substances, artificial graphite and hard carbon, a conductive agent acetylene black, a binder styrene-butadiene rubber (SBR), and a thickener sodium carboxymethyl cellulose (CMC) were thoroughly stirred and uniformly mixed in a deionized water solvent system at a weight ratio of 90:5:2:2:1. Then, a copper foil was coated with the mixture, followed by drying and cold pressing to obtain the negative electrode plate.

Negative electrode active materials, graphite and silicon-carbon materials, carbon black (SP), styrene-butadiene rubber (SBR), and carboxymethyl cellulose (CMC) were dissolved in a deionized water solvent at a weight ratio of 90:4:4:2. The mixture was stirred to obtain a uniformly dispersed negative electrode slurry. The surface of a negative electrode current collector copper foil was evenly coated with the negative electrode slurry, followed by drying, cold pressing, and cutting to obtain the negative electrode plate. Based on the total mass of the graphite and the silicon-carbon materials, the mass percentage of the silicon-carbon materials was 30%.

4) Separation film

A polypropylene film was used as the separation film.

5) Preparation of electrolytic solution

In a glove box under an argon atmosphere ($H_2O$ < 0.1 ppm and $O_2$ < 0.1 ppm), organic solvents ethylene carbonate (EC) and ethyl methyl carbonate (EMC) were uniformly mixed at a volume ratio of 3/7. A lithium salt $LiPF_6$ was then added and dissolved in the organic solvent, and the mixture was stirred uniformly to achieve a $LiPF_6$ mass content of 12.5%, thereby obtaining the electrolytic solution of Example 1.

6) Preparation of battery

The positive electrode plate, the separation film, and the negative electrode plate of Example 1 were stacked in sequence, with the separation film placed between the positive electrode plate and the negative electrode plate to fulfill the function of separation. The stack was then wound to obtain a bare cell, and the tabs were welded to the bare cell. The bare cell was placed in an aluminum shell, which was then baked at 80 °C to remove water, injected with an electrolytic solution, and sealed to obtain an uncharged battery.

The uncharged battery was then sequentially subjected to processes including standing, hot and cold pressing, formation, shaping, capacity testing, and the like, to obtain the lithium-ion battery product of Example 1.

The preparation parameters of Examples 2 to 20 and Comparative Examples 1 to 3 were substantially the same as those of Example 1, with specific parameters provided in Tables 1 and 2.

II. Test method

1. Characterization of positive electrode active material

1) Chemical formula determination of aggregate material, first aggregate, and second aggregate

The chemical formula of the sample was determined by measuring the proportion of each element in the material using an inductively coupled plasma (ICP) spectrometer, such as the Spectroblue model.

2) Particle size of primary particle of aggregate material, first aggregate, and second aggregate

SEM testing: a sample was cold-pressed before being cut using an Ar particle beam to expose an end surface, and an end surface image of the sample was obtained using a scanning electron microscope (SEM). The size of the primary particles of the sample was measured based on the SEM images. At least three samples were measured, with at least 50 pieces of data measured for each sample, and the mean value was taken as the particle size of the primary particle of the sample.

3) $D_V50$ and (Dv90 - Dv10) / Dv50 of aggregate material, first aggregate, and second aggregate

The volume distribution particle sizes Dv10, Dv50, and Dv90 are well-known concepts in the art. Specifically, Dv10 is a particle size at which the cumulative volume reaches 10% starting from the small particle size side in a volume-based particle size distribution of the powder, typically expressed in $\mu$m. Dv50 is a particle size at which the cumulative volume reaches 50% starting from the small particle size side in a volume-based particle size distribution of the powder. Dv90 is a particle size at which the cumulative volume reaches 90% starting from the small particle size side in a volume-based particle size distribution of the powder.

The volume distribution particle sizes Dv10, Dv50, and Dv90 of the above particle can be measured using methods known in the art. As an example, reference may be made to the GB/T 19077-2016/ISO 13320:2009 *Particle size*

*analysis-Laser diffraction methods,* and the Malvern 3000 device may be used for measurement.

4) Unimodal peak position of particle size distribution graph

Reference was made to the GB/T 19077-2016/ISO 13320:2009 *Particle size analysis-Laser diffraction methods,* and the Malvern 3000 device was used for measurement, to obtain a particle size distribution graph based on the volume distribution. The unimodal peak position was determined based on the particle size distribution graph.

5) Specific surface area of aggregate material

The specific surface area BET can be measured using methods known in the art. As an example, reference may be made to GB/T 19587-2017 *Determination of the specific surface area of solids by gas adsorption using the BET method,* and the device TriStar II 3020 may be used for measurement.

2. Positive electrode plate

1) Coating surface density of positive electrode film layer

The coating surface density of the positive electrode film layer is determined by measuring the coating weight (g) and coating area (cm$^2$) (with more than 14 sampling points) of the positive electrode film layer on one side. Specifically, the coating surface density of the positive electrode film layer is calculated as the coating weight (g) of the positive electrode film layer on one side divided by the coating area (cm$^2$) of the positive electrode film layer.

2) Compaction density of positive electrode plate

The compaction density PD of the positive electrode plate was determined by measuring the surface density (g/cm$^2$) and thickness (cm) (with more than 14 sampling points) of the positive electrode film layer on one side. Specifically, the compaction density PD of the positive electrode plate is calculated as the surface density (g/cm$^2$) of the positive electrode film layer on one side divided by the thickness (cm) of the positive electrode film layer.

3) Elongation of positive electrode plate in length direction

A 1 m long positive electrode plate before cold pressing was taken, with markings made at both endpoints, and the pressure was adjusted to achieve the target compaction density. After cold pressing, the distance between the two endpoints of the positive electrode plate was measured and recorded as L. The elongation of the positive electrode plate was calculated as

$$(L-1)/1 \times 100\%.$$

3. Battery

1) Mass energy density of battery

Capacity test of the battery cell: The battery cell was allowed to stand at 25 °C for 2 h to ensure that the temperature of the battery cell was 25 °C. At 25 °C, the battery cell was charged at 0.1 C to a charge cut-off voltage, and constant-voltage charging was continued at the charge cut-off voltage until the current reached 0.05 C, at which point charging was terminated (where C represents the rated capacity of the battery cell). The battery cell was allowed to stand at 25 °C for 1 h. At 25 °C, the battery cell was discharged at 0.1 C to a discharge cut-off voltage, and the total discharge capacity and total discharge energy of the battery cell were recorded as C0 and E0, respectively.
Battery cell weight measurement: The battery cell was placed on an electronic balance until the weight stabilized, and the battery cell weight M0 was recorded.
Energy density calculation: The energy density of the battery cell was calculated as the battery cell discharge energy E0 divided by the battery cell weight M0.

2) Discharge time of battery at 40% SOC at 4.5 C

The battery cell was discharged at a constant current of 0.33 C to 2.8 V and allowed to stand for 30 min. The battery cell was then charged at a constant current of 0.33 C to 4.25 V, followed by constant voltage charging at 0.05 C until the voltage stabilizes, and allowed to stand for 30 min. The battery cell was then discharged at a constant current of 0.33 C to 2.8 V, at which point the initial capacity C0 was read, and allowed to stand for 30 min. The battery cell was then charged at a constant current of 0.33 C to 4.25 V, followed by constant voltage charging at 0.05 C until the voltage stabilizes, and allowed to stand for 30 min. The battery cell was then discharged at a constant current of 0.33 C to 0.4 C0 Ah (40% SOC) and allowed to stand for 60 min. Finally, the battery cell was discharged at a constant current of 4.5 C to 2.8 V, with the discharge time recorded.

### III. Analysis of test results of examples and comparative examples

The batteries of the examples and comparative examples were prepared according to the methods described above, and various performance parameters were measured. The results are shown in Table 1, Table 2, and Table 3 below.

Table 1

| Number | Aggregate material | | | | | |
|---|---|---|---|---|---|---|
| | Chemical formula | (Dv90 - Dv10) / Dv50 | Particle size of primary particle/$\mu$m | Particle size Dv50/$\mu$m | Unimodal peak position in particle size distribution graph/$\mu$m | Specific surface area/m$^2$/g |
| Example 1 | $LiNi_{0.937}Co_{0.05}Mn_{0.013}O_2$ | 2.0 | 350 | 9.5 | 9.5 | 0.7 |
| Example 2 | $LiNi_{0.9375}Co_{0.04}Mn_{0.0225}O_2$ | 1.6 | 350 | 9.7 | 9.7 | 0.55 |
| Example 3 | $LiNi_{0.9375}Co_{0.0475}Mn_{0.015}O_2$ | 1.8 | 350 | 10.3 | 10.3 | 0.59 |
| Example 4 | $LiNi_{0.948}Co_{0.042}Mn_{0.01}O_2$ | 2.1 | 350 | 8.5 | 8.5 | 0.64 |
| Example 5 | $LiNi_{0.095}Co_{0.033}Mn_{0.017}O_2$ | 2.3 | 350 | 7.2 | 7.2 | 0.66 |
| Example 6 | $LiNi_{0.959}Co_{0.039}Mn_{0.002}O_2$ | 2.1 | 110 | 9.1 | 9.1 | 0.78 |
| Example 7 | $LiNi_{0.96}Co_{0.02}Mn_{0.02}O_2$ | 2.0 | 600 | 9.2 | 9.2 | 0.79 |
| Example 8 | $LiNi_{0.967}Co_{0.02}Mn_{0.013}O_2$ | 1.8 | 300 | 8.9 | 8.9 | 0.68 |
| Example 9 | $LiNi_{0.967}Co_{0.0255}Mn_{0.0075}O_2$ | 1.8 | 500 | 8.8 | 8.8 | 0.69 |
| Example 10 | $LiNi_{0.95}Co_{0.037}Mn_{0.013}O_2$ | 1.9 | 250 | 9 | 9 | 0.89 |
| Example 11 | $LiNi_{0.953}Co_{0.033}Mn_{0.014}O_2$ | 1.9 | 390 | 13.5 | 13.5 | 0.87 |
| Example 12 | $LiNi_{0.96}Co_{0.033}Mn_{0.007}O_2$ | 2.1 | 395 | 11.5 | 11.5 | 0.75 |
| Example 13 | $LiNi_{0.951}Co_{0.029}Mn_{0.02}O_2$ | 2.0 | 395 | 14.9 | 14.9 | 0.76 |
| Example 14 | $LiNi_{0.936}Co_{0.046}Mn_{0.018}O_2$ | 1.9 | 400 | 10.7 | 10.7 | 0.74 |
| Example 15 | $LiNi_{0.94}Co_{0.04}Mn_{0.02}O_2$ | 2.0 | 410 | 8.8 | 8.8 | 0.72 |
| Example 16 | $LiNi_{0.94}Co_{0.05}Mn_{0.01}O_2$ | 2.1 | 405 | 8.9 | 8.9 | 0.68 |
| Example 17 | $LiNi_{0.942}Co_{0.044}Mn_{0.014}O_2$ | 1.8 | 400 | 6.3 | 6.3 | 0.65 |
| Example 18 | $LiNi_{0.945}Co_{0.0325}Mn_{0.0225}O_2$ | 1.9 | 395 | 9.5 | 9.5 | 0.62 |
| Example 19 | $LiNi_{0.954}Co_{0.04}Mn_{0.006}O_2$ | 2.1 | 410 | 9.2 | 9.2 | 0.59 |
| Example 20 | $LiNi_{0.955}Co_{0.0275}Mn_{0.0175}O_2$ | 2.1 | 400 | 8.3 | 8.3 | 0.51 |
| Comparative Example 1 | $LiNi_{0.97}Co_{0.02}Mn_{0.01}O_2$ | 1.4 | 350 | 8.5 | 8.5 | 0.62 |
| Comparative Example 2 | $LiNi_{0.964}Co_{0.0195}Mn_{0.0165}O_2$ | 1.55 | 700 | 9.5 | 9.5 | 0.81 |
| Comparative Example 3 | $LiNi_{0.96}Co_{0.04}Mn_{0.01}O_2$ | 1.23 | 230 | 5.5 | 5.5 | 0.58 |

Table 2

| Number | First aggregate | | | | Second aggregate | | | | Mass ratio of first aggregate to second aggregate |
|---|---|---|---|---|---|---|---|---|---|
| | Composition | Dv50/$\mu$m | (Dv90 - Dv10) / Dv50 | Particle size of primary particle/$\mu$m | Composition | Dv50/$\mu$m | (Dv90 - Dv10) / Dv50 | Particle size of primary particle/$\mu$m | |
| Example 1 | $LiNi_{0.94}Co_{0.05}Mn_{0.01}O_2$ | 11.49 | 1.25 | 495 | $LiNi_{0.93}Co_{0.05}Mn_{0.02}O_2$ | 7.55 | 1.42 | 220 | 7:3 |
| Example 2 | $LiNi_{0.94}Co_{0.04}Mn_{0.02}O_2$ | 12.91 | 1.23 | 397 | $LiNi_{0.93}Co_{0.04}Mn_{0.03}O_2$ | 6.35 | 1.49 | 150 | 75:25 |
| Example 3 | $LiNi_{0.94}Co_{0.05}Mn_{0.01}O_2$ | 12.12 | 1.34 | 453 | $LiNi_{0.94}Co_{0.04}Mn_{0.02}O_2$ | 7.23 | 1.32 | 160 | 65:35 |
| Example 4 | $LiNi_{0.95}Co_{0.04}Mn_{0.01}O_2$ | 10.59 | 1.33 | 435 | $LiNi_{0.94}Co_{0.05}Mn_{0.01}O_2$ | 6.41 | 1.33 | 105 | 8:2 |
| Example 5 | $LiNi_{0.95}Co_{0.03}Mn_{0.02}O_2$ | 9.48 | 1.15 | 400 | $LiNi_{0.95}Co_{0.04}Mn_{0.01}O_2$ | 4.92 | 1.25 | 120 | 7:3 |
| Example 6 | $LiNi_{0.96}Co_{0.04}Mn_{0.01}O_2$ | 11.6 | 1.45 | 129 | $LiNi_{0.95}Co_{0.03}Mn_{0.02}O_2$ | 5.76 | 1.42 | 100 | 9:1 |
| Example 7 | $LiNi_{0.96}CO_{0.02}Mn_{0.02}O_2$ | 10.9 | 1.48 | 892 | $LiNi_{0.96}CO_{0.02}Mn_{0.02}O_2$ | 4.22 | 1.35 | 290 | 8:2 |
| Example 8 | $LiNi_{0.97}Co_{0.02}Mn_{0.01}O_2$ | 13.25 | 1.38 | 415 | $LiNi_{0.96}CO_{0.02}Mn_{0.02}O_2$ | 7.92 | 1.36 | 150 | 7:3 |
| Example 9 | $LiNi_{0.97}Co_{0.015}Mn_{0.015}O_2$ | 12.24 | 1.27 | 604 | $LiNi_{0.93}Co_{0.05}Mn_{0.02}O_2$ | 7.56 | 1.47 | 140 | 7:3 |
| Example 10 | $LiNi_{0.95}Co_{0.04}Mn_{0.01}O_2$ | 14.24 | 1.25 | 373 | $LiNi_{0.95}Co_{0.03}Mn_{0.02}O_2$ | 5.32 | 1.33 | 150 | 7:3 |
| Example 11 | $LiNi_{0.95}Co_{0.03}Mn_{0.02}O_2$ | 14.92 | 0.84 | 525 | $LiNi_{0.96}Co_{0.04}Mn_{0.01}O_2$ | 5.26 | 1.15 | 150 | 7:3 |
| Example 12 | $LiNi_{0.96}Co_{0.04}Mn_{0.01}O_2$ | 13.55 | 0.85 | 515 | $LiNi_{0.96}Co_{0.02}Mn_{0.02}O_2$ | 4.56 | 1.45 | 170 | 65:35 |
| Example 13 | $LiNi_{0.96}Co_{0.02}Mn_{0.02}O_2$ | 15 | 0.75 | 519 | $LiNi_{0.93}Co_{0.05}Mn_{0.02}O_2$ | 7.32 | 1.48 | 180 | 7:3 |
| Example 14 | $LiNi_{0.94}Co_{0.05}Mn_{0.01}O_2$ | 12.96 | 0.95 | 507 | $LiNi_{0.93}Co_{0.04}Mn_{0.03}O_2$ | 7.52 | 1.38 | 190 | 6:4 |
| Example 15 | $LiNi_{0.94}Co_{0.04}Mn_{0.02}O_2$ | 10.78 | 1.05 | 488 | $LiNi_{0.94}Co_{0.04}Mn_{0.02}O_2$ | 6.82 | 1.27 | 120 | 8:2 |
| Example 16 | $LiNi_{0.94}Co_{00.05}Mn_{0.01}O_2$ | 11.52 | 0.95 | 489 | $LiNi_{0.94}Co_{0.05}Mn_{0.01}O_2$ | 6.8 | 1.39 | 110 | 5:5 |
| Example 17 | $LiNi_{0.95}Co_{0.04}Mn_{0.01}O_2$ | 9.05 | 0.88 | 478 | $LiNi_{0.93}Co_{0.05}Mn_{0.02}O_2$ | 3.35 | 1.35 | 190 | 6:4 |
| Example 18 | $LiNi_{0.96}Co_{0.03}Mn_{0.02}O_2$ | 11.69 | 0.75 | 495 | $LiNi_{0.93}Co_{0.04}Mn_{0.03}O_2$ | 7.31 | 1.44 | 180 | 75:25 |
| Example 19 | $LiNi_{0.96}Co_{0.04}Mn_{0.01}O_2$ | 11.27 | 0.74 | 492 | $LiNi_{0.94}Co_{0.04}Mn_{0.02}O_2$ | 7.13 | 1.27 | 240 | 7:3 |
| Example 20 | $LiNi_{0.96}Co_{00.02}Mn_{0.02}O_2$ | 10.45 | 0.79 | 483 | $LiNi_{0.94}Co_{00.05}Mn_{0.01}O_2$ | 6.15 | 1.25 | 260 | 75:25 |
| Comparative Example 1 | $LiNi_{0.97}Co_{0.02}Mn_{0.01}O_2$ | 8.5 | 1.4 | 350 | / | / | / | / | / |
| Comparative Example 2 | $LiNi_{0.97}Co_{0.015}Mn_{0.015}O_2$ | 11.4 | 1.44 | 380 | $LiNi_{0.95}Co_{0.03}Mn_{0.02}O_2$ | 7.5 | 0.8 | 260 | 7:3 |

(continued)

| Number | First aggregate | | | | Second aggregate | | | | Mass ratio of first aggregate to second aggregate |
| --- | --- | --- | --- | --- | --- | --- | --- | --- | --- |
| | Composition | Dv50/μm | (Dv90 - Dv10) / Dv50 | Particle size of primary particle/μm | Composition | Dv50/μm | (Dv90 - Dv10) / Dv50 | Particle size of primary particle/μm | |
| Comparative Example 3 | / | / | / | / | $LiNi_{0.96}Co_{0.04}Mn_{0.01}O_2$ | 5.5 | 1.23 | 230 | / |

Table 3

| Number | Performance of electrode plate | | | Battery performance | |
|---|---|---|---|---|---|
| | Surface density of electrode plate (mg/cm$^2$) | Compaction density (g/cm$^3$) | Elongation in length direction | Energy density of battery (Wh/Kg) | 40% SOC discharge time/sec |
| Example 1 | 26.1 | 3.75 | 0.75% | 470 | 119 |
| Example 2 | 21.8 | 3.79 | 0.78% | 409 | 150 |
| Example 3 | 22.1 | 3.71 | 0.70% | 482 | 148 |
| Example 4 | 23.2 | 3.7 | 0.72% | 449 | 140 |
| Example 5 | 22.6 | 3.71 | 0.71% | 420 | 144 |
| Example 6 | 22.5 | 3.72 | 0.72% | 419 | 145 |
| Example 7 | 24.2 | 3.65 | 0.74% | 443 | 133 |
| Example 8 | 25.3 | 3.66 | 0.75% | 459 | 125 |
| Example 9 | 27.2 | 3.61 | 0.78% | 486 | 112 |
| Example 10 | 29.1 | 3.52 | 0.78% | 501 | 98 |
| Example 11 | 30.8 | 3.52 | 0.79% | 437 | 86 |
| Example 12 | 31.5 | 3.5 | 0.78% | 496 | 81 |
| Example 13 | 32.4 | 3.51 | 0.79% | 429 | 75 |
| Example 14 | 22.9 | 3.74 | 0.72% | 468 | 142 |
| Example 15 | 23.4 | 3.76 | 0.72% | 459 | 139 |
| Example 16 | 21.9 | 3.77 | 0.77% | 482 | 149 |
| Example 17 | 24.6 | 3.59 | 0.78% | 433 | 130 |
| Example 18 | 25.3 | 3.6 | 0.77% | 459 | 125 |
| Example 19 | 23.8 | 3.65 | 0.71% | 472 | 136 |
| Example 20 | 24.7 | 3.61 | 0.72% | 450 | 129 |
| Comparative Example 1 | 22.2 | 3.44 | 0.70% | 335 | 67 |
| Comparative Example 2 | 22.6 | 3.45 | 0.75% | 378 | 95 |
| Comparative Example 3 | 23.4 | 3.42 | 0.71% | 342 | 78 |

From the above results, in the positive electrode active material of Examples 1 to 20, the positive electrode active material included an aggregate material, and the chemical formula of the aggregate material was $LiNi_{0.937}Co_{0.05}Mn_{0.013}O_2$, $LiNi_{0.9375}Co_{0.04}Mn_{0.0225}O_2$, $LiNi_{0.9375}Co_{0.0475}Mn_{0.015}O_2$, $LiNi_{0.948}Co_{0.042}Mn_{0.01}O_2$, $LiNi_{0.95}Co_{0.033}Mn_{0.017}O_2$, $LiNi_{0.959}Co_{0.039}Mn_{0.002}O_2$, $LiNi_{0.96}Co_{0.02}Mn_{0.02}O_2$, $LiNi_{0.967}Co_{0.02}Mn_{0.013}O_2$, $LiNi_{0.967}Co_{0.0255}Mn_{0.0075}O_2$, $LiNi_{0.95}Co_{0.037}Mn_{0.013}O_2$, $LiNi_{0.953}Co_{0.033}Mn_{0.014}O_2$, $LiNi_{0.96}Co_{0.033}Mn_{0.007}O_2$, $LiNi_{0.951}Co_{0.029}Mn_{0.02}O_2$, $LiNi_{0.936}Co_{0.046}Mn_{0.018}O_2$, $LiNi_{0.94}Co_{0.04}Mn_{0.02}O_2$, $LiNi_{0.94}Co_{0.05}Mn_{0.01}O_2$, $LiNi_{0.942}Co_{0.044}Mn_{0.014}O_2$, $LiNi_{0.945}Co_{0.0325}Mn_{0.0225}O_2$, $LiNi_{0.954}Co_{0.04}Mn_{0.006}O_2$, or $LiNi_{0.955}Co_{0.0275}Mn_{0.0175}O_2$. The primary particle of the aggregate material had a particle size of 100 to 600 nm, and the particle size distribution of the aggregate material satisfied (Dv90 - Dv10) / Dv50 $\geq$ 1.6.

From the comparison between Examples 1 to 20 and Comparative Examples 1 to 3, it can be seen that the primary particle of the aggregate material had a particle size of 100 to 600 nm, and the particle size distribution of the aggregate material satisfied (Dv90 - Dv10) / Dv50 $\geq$ 1.6, which enhanced the compaction density of the electrode plate and the energy density of the battery. Additionally, the battery exhibited excellent rate capability and met the usage requirements of novel batteries.

From the comparison between Examples 8 to 10 and Examples 6 and 7, it can be seen that the primary particle of the aggregate material had a particle size of 200 to 500 nm, which can further enhance the energy density of the battery.

From Examples 1 to 20, it can be seen that the aggregate material had a particle size Dv50 of 6 to 15 $\mu$m. The

electrode plate exhibited high compaction density and low elongation, and the battery exhibited high energy density and excellent rate capability, comprehensively improving the electrochemical performance of the battery.

From the comparison of Examples 12, 14 to 16, and 18 to 20 with Examples 11, 13, and 17, it can be seen that the aggregate material had a particle size Dv50 of 7 to 13 $\mu$m, which can further enhance the energy density of the battery while maintaining excellent rate capability.

From Examples 1 to 20, it can be seen that the particle size distribution graph of the aggregate material, as determined by particle size analysis-laser diffraction methods, was unimodal, with a unimodal peak position ranging from 6 to 15 $\mu$m. The electrode plate exhibited high surface density and low elongation, and the battery exhibited high energy density and excellent rate capability, comprehensively improving the electrochemical performance of the battery.

From the comparison of Examples 12, 14 to 16, and 18 to 20 with Examples 11, 13, and 17, it can be seen that the particle size distribution graph of the aggregate material, as determined by particle size analysis-laser diffraction methods, was unimodal, with a unimodal peak position ranging from 7 to 13 $\mu$m, which can further enhance the energy density of the battery while maintaining excellent rate capability.

From Examples 1 to 20, it can be seen that the particle size distribution of the aggregate material satisfied $1.6 \leq$ (Dv90 - Dv10) / Dv50 $\leq 2.3$. The electrode plate exhibited high surface density and low elongation, and the battery exhibited high energy density and excellent rate capability, comprehensively improving the electrochemical performance of the battery.

From the comparison between Example 4 and Example 5, the particle size distribution of the aggregate material satisfied $1.8 \leq$ (Dv90 - Dv10) / Dv50 $\leq 2.1$, which can further enhance the energy density of the battery.

From Examples 1 to 20, it can be seen that the aggregate material had a specific surface area of 0.5 $m^2$/g to 0.9 $m^2$/g. The electrode plate exhibited high surface density and low elongation, and the battery exhibited high energy density and excellent rate capability, comprehensively improving the electrochemical performance of the battery.

From Examples 1 to 20, it can be seen that the positive electrode plate had an elongation in the length direction of 7% to 8%, exhibiting low elongation and improved processability.

From Examples 1 to 20, it can be seen that the positive electrode film layer had a coating surface density of 21.5 mg/$cm^2$ to 32.5 mg/$cm^2$. The electrode plate exhibited high surface density, and the battery exhibited high energy density.

From Examples 1 to 20, it can be seen that the positive electrode plate had a compaction density of 3.5 g/$cm^3$ to 3.8 g/$cm^3$. The electrode plate exhibited high compaction density, and the battery exhibited high energy density.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A positive electrode active material, comprising an aggregate material, a chemical formula of the aggregate material being $Li_aNi_xCo_yM_{1-x-y}O_2$, wherein $0.6 \leq a \leq 1.2$, $0.6 \leq x \leq 1$, $0 \leq y \leq 0.4$, and $-0.1 \leq b \leq 0.1$, and M comprises one or more of Mn, Al, B, Zr, Sr, Y, Sb, W, Ti, Mg, Nb, and Mo; a primary particle of the aggregate material has a particle size of 100 to 600 nm, and particle size distribution of the aggregate material satisfies (Dv90 - Dv10) / Dv50 $\geq 1.6$.

2. The positive electrode active material according to claim 1, wherein in the chemical formula $Li_aNi_xCo_yM_{1-x-y}O_{2-b}$, $0.6 \leq a \leq 1.2$, $0.8 \leq x \leq 1$, $0 \leq y \leq 0.2$, and $-0.1 \leq b \leq 0.1$, and optionally, $0.8 \leq a \leq 1.2$, $0.93 \leq x \leq 0.98$, $0 \leq y \leq 0.07$, and $-0.1 \leq b \leq 0.1$.

3. The positive electrode active material according to claim 1 or 2, wherein the primary particle of the aggregate material has a particle size of 200 to 500 nm.

4. The positive electrode active material according to any one of claims 1 to 3, wherein the aggregate material has a particle size Dv50 of 6 to 15 $\mu$m, optionally 7 to 13 $\mu$m.

5. The positive electrode active material according to any one of claims 1 to 4, wherein a particle size distribution graph of the aggregate material, as determined by particle size analysis-laser diffraction methods, is unimodal, with a unimodal peak position ranging from 6 to 15 $\mu$m, optionally 7 to 13 $\mu$m.

6. The positive electrode active material according to any one of claims 1 to 5, wherein the particle size distribution of the aggregate material satisfies $1.6 \leq$ (Dv90 - Dv10) / Dv50 $\leq 2.3$, and optionally, the particle size distribution of the aggregate material satisfies $1.8 \leq$ (Dv90 - Dv10) / Dv50 $\leq 2.1$.

7. The positive electrode active material according to any one of claims 1 to 6, wherein the aggregate material has a specific surface area of 0.5 to 0.9 $m^2/g$.

8. The positive electrode active material according to any one of claims 1 to 7, wherein the aggregate material comprises a first aggregate and a second aggregate; the first aggregate has a particle size Dv50 of 9 to 15 $\mu$m, and the second aggregate has a particle size Dv50 of 4 to 8 $\mu$m.

9. The positive electrode active material according to claim 8, wherein a chemical formula of the first aggregate is $Li_{a1}Ni_{x1}Co_{y1}M1_{1-x1-y1}O_{2-b1}$, a chemical formula of the second aggregate is $Li1_{a2}Ni_{x2}Co_{y2}M2_{1-x2-y2}O_{2-b2}$, and $x_1 \geq x_2$, wherein
$0.6 \leq a1 \leq 1.2, 0.6 \leq x1 \leq 1, 0 \leq y1 \leq 0.4, -0.1 \leq b1 \leq 0.1, 0.6 \leq a2 \leq 1.2, 0.4 \leq x2 \leq 1, 0 \leq y2 < 0.6, -0.1 \leq b2 \leq 0.1$, and M1 and M2 each independently comprise one or more of Mn, Al, B, Zr, Sr, Y, Sb, W, Ti, Mg, Nb, and Mo.

10. The positive electrode active material according to claim 9, wherein in the chemical formula $Li_{a1}Ni_{x1}Co_{y1}M1_{1-x1-y1}O_{2-b1}$ of the first aggregate, $0.8 \leq a1 \leq 1.2, 0.94 \leq x1 \leq 0.98, 0 \leq y1 \leq 0.06$, and $-0.1 \leq b1 \leq 0.1$.

11. The positive electrode active material according to claim 9 or 10, wherein in the chemical formula $Li_{a2}Ni_{x2}Co_{y2}M2_{1-x2-y2}O_{2-b2}$ of the second aggregate, $0.8 \leq a2 \leq 1.2, 0.93 \leq x2 \leq 0.96, 0 \leq y2 \leq 0.07$, and $-0.1 \leq b2 \leq 0.1$.

12. The positive electrode active material according to any one of claims 8 to 11, wherein a particle size of a primary particle of the first aggregate is larger than a particle size of a primary particle of the second aggregate.

13. The positive electrode active material according to any one of claims 8 to 12, wherein the primary particle of the first aggregate has a particle size of 100 to 1000 nm, and the primary particle of the second aggregate has a particle size of 100 to 300 nm.

14. The positive electrode active material according to any one of claims 8 to 13, wherein particle size distribution of the first aggregate and the second aggregate satisfies (Dv90 - Dv10) / Dv50 $\leq 1.50$.

15. The positive electrode active material according to any one of claims 8 to 14, wherein the particle size distribution of the first aggregate satisfies $0.50 \leq$ (Dv90 - Dv10) / Dv50 $\leq 1.30$, and the particle size distribution of the second aggregate satisfies $1.30 \leq$ (Dv90 - Dv10) / Dv50 $\leq 1.50$.

16. The positive electrode active material according to any one of claims 8 to 15, wherein a mass ratio of the first aggregate to the second aggregate is 1:1 to 9:1.

17. A positive electrode plate, comprising a positive electrode current collector and a positive electrode film layer disposed on at least one surface of the positive electrode current collector, wherein the positive electrode film layer comprises the positive electrode active material according to any one of claims 1 to 16.

18. The positive electrode plate according to claim 17, wherein the positive electrode active material has a mass content of 95% to 99.5%, based on a total mass of the positive electrode film layer.

19. The positive electrode plate according to claim 17 or 18, wherein when the positive electrode plate has a compaction density of 3.5 $g/cm^3$ to 3.8 $g/cm^3$, the positive electrode plate has an elongation in a length direction of 7% to 8%.

20. The positive electrode plate according to any one of claims 17 to 19, wherein the positive electrode film layer has a coating surface density of 21.5 $mg/cm^2$ to 32.5 $mg/cm^2$.

21. The positive electrode plate according to any one of claims 17 to 20, wherein the positive electrode plate has a compaction density of 3.5 $g/cm^3$ to 3.8 $g/cm^3$.

22. A secondary battery, comprising a positive electrode plate, wherein the positive electrode plate is the positive electrode plate according to any one of claims 16 to 21.

**23.** The secondary battery according to claim 22, wherein the secondary battery comprises a lithium-ion battery.

**24.** An electric device, comprising the secondary battery according to claim 22 or 23.

5

FIG. 1

5

FIG. 2

**4**

FIG. 3

**1**

FIG. 4

**1**

FIG. 5

FIG. 6

# INTERNATIONAL SEARCH REPORT

International application No.

**PCT/CN2023/085628**

### A. CLASSIFICATION OF SUBJECT MATTER

H01M4/36(2006.01)i; H01M4/525(2010.01)i; H01M4/505(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 镍, 钴, 锰, 一次颗粒, 二次颗粒, 团聚, 粒径, 体积, 分布, nickel, cobalt, manganese, primary particle, secondary particle, agglomerate, particle size, volume, distribution, DV10, DV50, DV90

### C. DOCUMENTS CONSIDERED TO BE RELEVANT

| Category* | Citation of document, with indication, where appropriate, of the relevant passages | Relevant to claim No. |
|---|---|---|
| X | WO 2021174480 A1 (NINGDE AMPEREX TECHNOLOGY LIMITED et al.) 10 September 2021 (2021-09-10) description, page 1, paragraph 4-page 8, paragraph 3 | 1-7, 17-24 |
| X | CN 111384372 A (NINGDE CONTEMPORARY AMPEREX TECHNOLOGY CO., LTD.) 07 July 2020 (2020-07-07) description, paragraphs 18-176 | 1-24 |
| A | CN 114256443 A (NINGDE CONTEMPORARY AMPEREX TECHNOLOGY CO., LTD.) 29 March 2022 (2022-03-29) entire document | 1-24 |
| A | JP 2021120937 A (SUMITOMO METAL MINING CO., LTD.) 19 August 2021 (2021-08-19) entire document | 1-24 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2023** | **15 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/085628**

| Patent document cited in search report | | | Publication date (day/month/year) | Patent family member(s) | | | Publication date (day/month/year) |
|---|---|---|---|---|---|---|---|
| WO | 2021174480 | A1 | 10 September 2021 | US | 2021280848 | A1 | 09 September 2021 |
| | | | | CN | 115053366 | A | 13 September 2022 |
| | | | | CN | 115053366 | B | 01 September 2023 |
| CN | 111384372 | A | 07 July 2020 | WO | 2020134781 | A1 | 02 July 2020 |
| | | | | EP | 3800710 | A1 | 07 April 2021 |
| | | | | EP | 3800710 | B1 | 15 February 2023 |
| | | | | US | 2021126242 | A1 | 29 April 2021 |
| | | | | US | 11177468 | B2 | 16 November 2021 |
| | | | | CN | 111384372 | B | 23 March 2021 |
| CN | 114256443 | A | 29 March 2022 | CN | 116072816 | A | 05 May 2023 |
| | | | | WO | 2022062745 | A1 | 31 March 2022 |
| | | | | EP | 4203106 | A1 | 28 June 2023 |
| | | | | US | 2023223523 | A1 | 13 July 2023 |
| JP | 2021120937 | A | 19 August 2021 | None | | | |

Form PCT/ISA/210 (patent family annex) (July 2022)